# EUROPEAN PATENT APPLICATION

(11) **EP 4 647 280 A2**
(43) Date of publication of application: **12.11.2025**
(21) Application number: 23914574.1
(22) Date of filing: 28.12.2023
(51) Int. Cl.: B60K 1/02

(54) **DRIVETRAIN HOUSING BODY, DRIVETRAIN, AND VEHICLE**

(30) Priority: 05.01.2023 CN 202310014577; 05.01.2023 CN 202310014574
(71) Applicant: BYD Company Limited, Shenzhen, Guangdong 518118 (CN)
(72) Inventor: YANG, Shenglin, Shenzhen, Guangdong 518118 (CN); CHEN, Yong, Shenzhen, Guangdong 518118 (CN); GAO, Yuan, Shenzhen, Guangdong 518118 (CN); ZHANG, Hongming, Shenzhen, Guangdong 518118 (CN); YANG, Lifeng, Shenzhen, Guangdong 518118 (CN); YANG, Ningning, Shenzhen, Guangdong 518118 (CN); LU, Guoxiang, Shenzhen, Guangdong 518118 (CN)
(74) Representative: Mathys & Squire
(86) International application number: PCT/CN2023/142807
(87) International publication number: WO 2024/146442

(57) **Abstract**

Provided are a powertrain housing, a powertrain and a vehicle. The powertrain housing includes a middle housing member and two side housing members, where an electric control mounting seat is disposed on the middle housing member, and a terminal block mounting cavity is arranged inside the electric control mounting seat. The two side housing members are arranged on two sides of the middle housing member, respectively, and each side housing member includes a motor casing. The terminal block mounting cavity is located in a portion of a space defined between the two motor casings, which close to the electric control mounting seat. The powertrain includes the powertrain housing described above. The vehicle includes the powertrain described above.

## Description

### CROSS-REFERENCE TO RELATED APPLICATIONS

This application claims priority to patent application No. 202310014577.7, filed on January 5, 2023, entitled "POWERTRAIN HOUSING, POWERTRAIN, AND VEHICLE", and patent application No. 202310014574.3, filed on January 5, 2023, and entitled "POWERTRAIN HOUSING, POWERTRAIN, AND VEHICLE", which are incorporated herein by reference in their entireties.

### TECHNICAL FIELD

This application relates to the field of vehicle manufacturing technologies, and in particular, to a powertrain housing, a powertrain having the powertrain housing, and a vehicle having the powertrain.

### BACKGROUND

At present, the development of the new energy vehicle industry is progressing rapidly. As one of the most important parts in new energy vehicles, the powertrain is subject to higher requirements in terms of reliability, lightweight design, and high spatial utilization. Especially, a dual-motor assembly that integrates dual motors, dual electronic controls and dual speed reducers requires a larger arrangement space than a single-motor system, which poses a new challenge to its spatial utilization.

There are a plurality of fastening points for a motor controller of a conventional electric drive assembly, some fastening points are located on a motor end cover, and some fastening points are located on the housing of a speed reducer. This fastening mode, which spans a plurality of different housings, is difficult for ensuring assembly and mounting accuracy, and is also difficult for determining a position for arrangement of a terminal block, making it unable to effectively optimize spatial arrangement.

### SUMMARY

To solve the foregoing technical problem or at least partially solve the foregoing technical problem, this application provides a powertrain housing, a powertrain, and a vehicle.

This application provides a powertrain housing, including:
a middle housing member, wherein an electric control mounting seat for mounting a motor controller is disposed on the middle housing member, and a terminal block mounting cavity for accommodating a terminal block is arranged inside the electric control mounting seat; and
two side housing members, wherein the two side housing members are arranged on two sides of the middle housing member, respectively, and each side housing member includes a motor casing for mounting a motor unit.

The terminal block mounting cavity is located in a portion of a space defined between the two motor casings, which is close to the electric control mounting seat.

Optionally, the middle housing member is provided with a first mounting hole fitting with a motor output shaft of the motor unit, and the first mounting hole is located directly below the terminal block mounting cavity.

Optionally, the middle housing member is provided with a third mounting hole fitting with a power output shaft, and the third mounting hole is arranged on a side, away from the electric control mounting seat, of the first mounting hole.

Optionally, the third mounting hole is located below a front side of the first mounting hole.

Optionally, the middle housing member is provided with a second mounting hole fitting with an intermediate shaft, and the second mounting hole is located between the first mounting hole and the third mounting hole.

Optionally, a plurality of mounting seats for connecting to the motor controller are disposed on the electric control mounting seat, and the mounting seat protrudes from the electric control mounting seat in a transverse direction.

Optionally, the electric control mounting seat includes a first support seat and a second support seat, the first support seat and the second support seat are relatively arranged in a front-rear direction of the middle housing member, at least two mounting seats are disposed on each of the first support seat and the second support seat, and a transverse width of the first support seat is greater than that of the second support seat.

Optionally, a plurality of reinforcing plates are disposed on the first support seat, and the plurality of reinforcing plates are spaced apart in the transverse direction of the middle housing member to form a grid-like structure on the top of the first support seat.

Optionally, one mounting seat is disposed on either side of the first support seat, one mounting seat is disposed on either side of the second support seat, and the top of the mounting seat extends upward so that a groove that is recessed toward the inside of the middle housing member is formed on the electric control mounting seat.

Optionally, two corresponding sides of the electric control mounting seat in the transverse direction of the middle housing member each are provided with a first wire opening for a line to pass through, and the first wire opening communicates with the terminal block mounting cavity.

Optionally, a front side of the electric control mounting seat is provided with an assembling opening, and the assembling opening communicates with the terminal block mounting cavity.

Optionally, the top of the electric control mounting seat is provided with a second wire opening for a line to pass through, and the second wire opening communicates with the terminal block mounting cavity.

Optionally, the terminal block includes a plate body for connecting to the middle housing member, a plurality of conductive sheets are arranged on the plate body in a penetrating manner, each of the conductive sheets is provided with a corresponding first terminal and a corresponding second terminal, the first terminal and the second terminal extend out of the plate body separately, the first terminal is configured to connect to the motor controller, and the second terminal is configured to connect to the motor unit.

Optionally, a distribution block is vertically disposed on one side of the plate body, the first terminal extends out of the distribution block, a top surface of the plate body is provided with a plurality of wire slots that are spaced apart, and each wire slot is internally provided with one of the second terminals.

Optionally, the plurality of conductive sheets are divided into two groups, the two groups of conductive sheets are symmetrically arranged in the transverse direction of the middle housing member, and the second terminal of each group of conductive sheets is configured to connect to a corresponding motor unit.

Optionally, the electric control mounting seat is arranged at the top of the middle housing member, and the electric control mounting seat and the middle housing member are integrally formed.

Optionally, the middle housing member is provided with a plurality of first reinforcing ribs extending in a transverse direction, and/or
the middle housing member is provided with a plurality of second reinforcing ribs extending in a front-rear direction.

This application provides a powertrain housing, including a middle housing member, a first accommodation cavity is arranged in the middle housing member, and the first accommodation cavity extends in an inclined direction relative to a horizontal plane to form a first space above a front portion of the middle housing member and a second space below a rear portion of the middle housing member.

Optionally, a top front end of the middle housing member extends downward to form a first front sidewall, a front upper end of the middle housing member extends backward to form an upper sidewall, and the first space is positioned between a front side of the first front sidewall and an upper side of the upper sidewall; and
a bottom rear end of the middle housing member extends upward to form a first rear sidewall, a rear lower end of the middle housing member extends forward to form a lower sidewall, and the second space is positioned between a rear side of the first rear sidewall and a lower side of the lower sidewall.

Optionally, the top of the middle housing member is formed as a first planar section, and/or
the bottom of the middle housing member is formed as a second planar section.

Optionally, a mounting seat is disposed on the first planar section for mounting an electric control.

Optionally, the upper sidewall is configured as an arc-shaped structure protruding toward a direction away from the first accommodation cavity; and/or
the lower sidewall is configured as an arc-shaped structure protruding toward a direction away from the first accommodation cavity.

Optionally, the first front sidewall and the upper sidewall are connected via a first arc-shaped section, and the first arc-shaped section is configured to be recessed toward the inside of the first accommodation cavity; and/or
the first rear sidewall and the lower sidewall are connected via a second arc-shaped section, and the second arc-shaped section is configured to be recessed toward the inside of the first accommodation cavity.

Optionally, the front upper end of the middle housing member extends downward to a bottom front end to form a second front sidewall; and
the rear lower end of the middle housing member extends upward to a top rear end to form a second rear sidewall.

Optionally, side housing members are detachably mounted on two sides of the middle housing member, respectively, the side housing member includes a motor casing and a transmission end cover extending outward in a radial direction of the motor casing, and a second accommodation cavity is arranged in the motor casing for mounting a drive motor.

Optionally, a motor end cover is detachably mounted on one end of the motor casing away from the middle housing member.

Optionally, reinforcing ribs are disposed between the motor casing and the transmission end cover.

Optionally, a mounting portion is arranged inside the middle housing member, the mounting portion is provided with a first mounting hole fitting with a power input shaft and a third mounting hole fitting with a power output shaft, and an included angle between an axis-to-axis connecting line of the power input shaft and the power output shaft and the horizontal plane is 20° to 60°.

Optionally, the mounting portion is provided with a second mounting hole, and the second mounting hole is configured to mate with an intermediate shaft between the power input shaft and the power output shaft.

A second aspect of this application provides a powertrain, including two motor units, two transmission units and the foregoing powertrain housing, each of the motor units is arranged in one motor casing, and the two transmission units are arranged in a receiving space defined between a middle housing member and a side housing member.

Optionally, the motor unit includes a transmission and a drive motor.

Optionally, the powertrain includes a plurality of system functional components, at least a part of at least one of the system functional components is disposed in a first space above a front portion of the middle housing member, and/or at least a part of at least one of the system functional components is disposed in a second space below a rear portion of the middle housing member.

Optionally, the powertrain includes a first motor unit and a second motor unit, the first motor unit is configured to drive a left wheel, and the second motor unit is configured to drive a right wheel.

The system functional component includes a locking mechanism arranged between the first motor unit and the second motor unit, the locking mechanism is configured to connect the first motor unit and the second motor unit for selective synchronization, and at least a part of the locking mechanism is located in the first space.

Optionally, the system functional component includes an oil pump, and at least a part of the oil pump is located in the second space.

A third aspect of this application provides a vehicle, including the powertrain described above.

Optionally, the vehicle further includes an engine assembly, and at least a part of the engine assembly is located in a first space above a front portion of a middle housing member.

Optionally, the vehicle further includes a frame assembly, the frame assembly includes a first cross beam extending in a transverse direction, and at least a part of the first cross beam is located in a second space below a rear portion of the middle housing member.

Optionally, the vehicle frame assembly further includes a second cross beam extending in the transverse direction, and a front portion of the middle housing member is connected to the second cross beam by suspension.

Optionally, the frame assembly further includes a third cross beam extending in the transverse direction, two side housing members are detachably mounted on two sides of the middle housing member, respectively, and rear portions of the two side housing members are connected to the third cross beam by suspension.

Through the technical solution described above, the first space and the second space can be used as spaces for the powertrain to avoid other components to ensure that the powertrain does not occupy too much space in a vertical direction and a front-rear direction and achieve sufficient avoidance of the powertrain and other components, thereby improving space utilization in vehicle packaging design.

Compared with the conventional technology, the technical solutions provided by implementations of this application have the following advantages:

The powertrain housing provided by this application supports a motor controller by a middle housing member, which can avoid the problem of poor assembly accuracy caused by crosshousing fit tolerances, and has high assembly accuracy, thereby improving mounting reliability. In addition, the surplus space between two motor units is used to arrange a terminal block mounting cavity for accommodating a terminal block, thereby having a high degree of integration.

### BRIEF DESCRIPTION OF DRAWINGS

FIG. 1 is a diagram of a structure of a powertrain housing according to an implementation of this application;
FIG. 2 is an exploded view of a powertrain housing according to an implementation of this application;
FIG. 3 is a diagram of a structure of a middle housing member according to an implementation of this application;
FIG. 4 is a diagram of a structure of the top of a middle housing member according to an implementation of this application;
FIG. 5 is a diagram of a structure of a middle housing member according to an implementation of this application with a motor controller mounted thereon;
FIG. 6 is a diagram of a structure of a terminal block according to an implementation of this application;
FIG. 7 is a diagram of a transmission principle of a powertrain according to an implementation of this application;
FIG. 8 is a side view of the middle housing member in FIG. 1;
FIG. 9 is a diagram of a powertrain housing provided by this application located in a vehicle body mounting cavity;
FIG. 10 is a bottom view of the powertrain housing in FIG. 9 located in the vehicle body mounting cavity; and

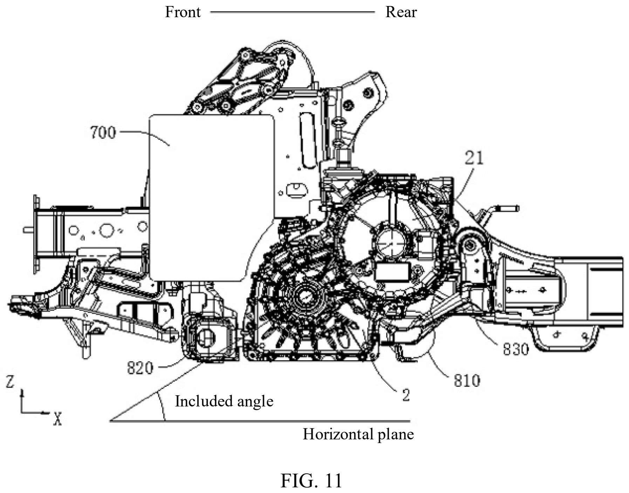

FIG. 11 is a side view of the powertrain housing in FIG. 9 located in the vehicle body mounting cavity.

### Reference numerals:

1: middle housing member; 101: first space: 102: second space; 103: first front sidewall; 1031: first arc-shaped section; 104: upper sidewall; 1041: second front sidewall; 105: first rear sidewall: 1051: second arc-shaped section: 106: lower sidewall; 1061: second rear sidewall; 107: first planar section; 108: second planar section; 110-first accommodation cavity; 120: mounting portion; 110: first accommodation cavity; 11: first mounting hole; 12: second mounting hole; 13: third mounting hole; 14: first reinforcing rib; 15: second reinforcing rib; 16: first mounting cavity; 161: first left half mounting cavity; 162: first right half mounting cavity; 17: second mounting cavity; 171: second left half mounting cavity; 172: second right half mounting cavity; 18: middle partition; 2: side housing member; 21: motor end cover; 22: motor casing; 211: second accommodation cavity: 220: transmission end cover; 230: reinforcing rib; 3: electric control mounting seat; 31: mounting seat; 32: first support seat; 321: reinforcing plate; 33: second support seat; 34: groove; 35: first wire opening; 36: assembling opening; 37: terminal block mounting cavity; 4: terminal block; 41: plate body; 42: conductive sheet; 421: first terminal; 422: second terminal; 43: distribution block; 44: wire slot; 45: neutral line terminal; 5: motor controller; 6: first motor unit; 7: second motor unit; 8: locking mechanism; 9, 91: motor output shaft; 92, 93: intermediate shaft; 94, 95: power output shaft; 96: first transmission apparatus; 97: second transmission apparatus; 410: first drive motor; 420: first transmission; 421: power input shaft; 510: second drive motor; 520: second transmission; 8: locking mechanism; 700: engine assembly; 800: longitudinal beam; 810: first cross beam; 820: second cross beam; 830: third cross beam; 1a: primary driving gear; 1b: primary driven gear; 2a: secondary driving gear; 2b: secondary driven gear.

### DESCRIPTION OF EMBODIMENTS

To make the objectives, features and advantages of this application more clearly, the technical solutions of this application are further described in detail below. It should be noted that implementations in this application and features in the implementations can be combined with each other without conflict.

The following description sets forth many specific details to facilitate a full understanding of this application, but this application may also be implemented in other ways different from those described herein. Clearly, the implementations in the specification are only a part of the embodiments of this application, rather than all the implementations.

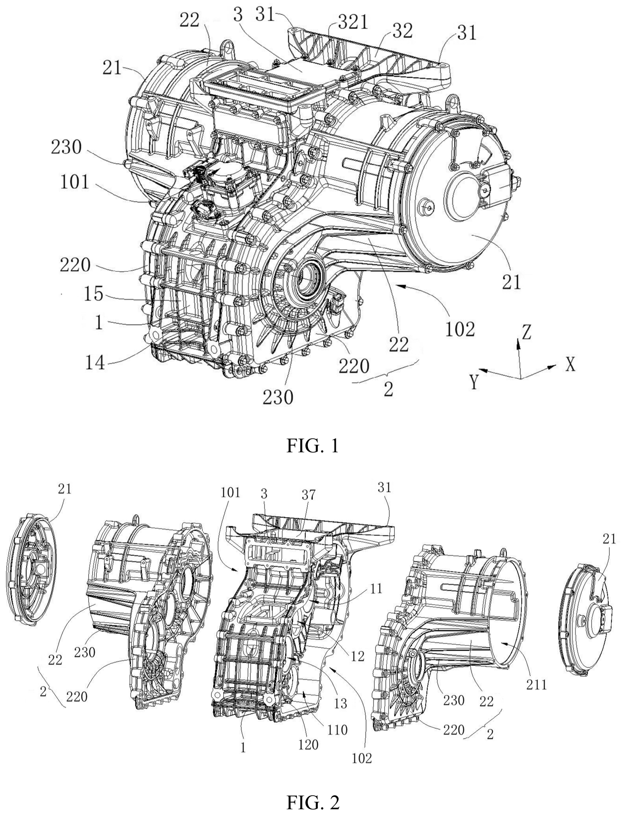

As shown in FIG. 1 to FIG. 5, a powertrain housing provided in an implementation of this application includes a middle housing member 1 and two side housing members 2.

An electric control mounting seat 3 for mounting a motor controller 5 is disposed on the middle housing member 1, and a terminal block mounting cavity 37 for accommodating a terminal block 4 is arranged inside the electric control mounting seat 3. Two side housing members 2 are arranged on two sides of the middle housing member 1, respectively, and each side housing member 2 includes a motor casing 22 for mounting a motor unit. The terminal block mounting cavity 37 is located in a portion of a space defined between the two motor casings 22, which is close to the electric control mounting seat 3.

With reference to FIG. 1 and FIG. 2, a motor end cover 21 is disposed on one side, away from the middle housing member 1, of the side housing member 2. That is, the powertrain housing includes two motor end covers 21, two side housing members 2, and one middle housing member 1. The motor unit includes a drive motor, the drive motor is arranged inside the motor casing 22. A motor end cover 21 is disposed at one end of the motor casing 22 away from the middle housing member 1. The terminal block 4 is arranged in the terminal block mounting cavity 37, the motor controller 5 is connected to the terminal block 4 by a line, and the motor unit is connected to the terminal block 4 by a line.

The powertrain housing provided by this application supports the motor controller 5 by using the middle housing member 1, which can avoid the problem of poor assembly accuracy caused by tolerance of fit across housings, and has high assembly accuracy, thereby improving mounting reliability. In addition, the surplus space between two motor units is used to arrange the terminal block mounting cavity 37 for accommodating the terminal block 4, thereby having a high degree of integration.

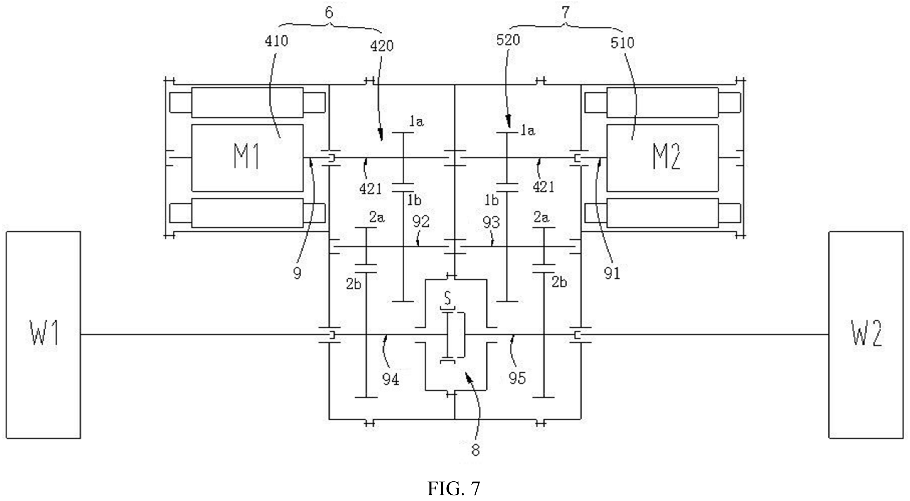

In some implementations, the powertrain housing provided by an implementation of this application can be used in a dual-drive assembly. As shown in FIG. 7, the motor unit includes a first motor unit 6 and a second motor unit 7, the middle housing member 1 may define a first mounting cavity 16 between the first motor unit 6 and the second motor unit 7, and the first mounting cavity 16 is located below the terminal block mounting cavity 37. Motor output shafts of the first motor unit 6 and the second motor unit 7 may extend into the first mounting cavity 16. In addition, the middle housing member 1 may further define a second mounting cavity 17 located below a longitudinal side of the first mounting cavity 16. A dual-electric-drive assembly may include a transmission apparatus and a power output shaft at least partially extending within the second mounting cavity 17. A motor output shaft of the first motor unit 6 and a motor output shaft of the second motor unit 7 may transmit power to a power output shaft through the transmission apparatus. Specifically, the first motor unit 6 and the second motor unit 7 are in transmission connection to a left wheel W1 and a right wheel W2 through transmission apparatuses (for example, a plurality of sets of gears), respectively. The middle housing member 1 may be further provided with a locking mechanism 8 for locking or releasing a transmission path from the first motor unit 6 to the left wheel W1 and a transmission path from the second motor unit 7 to the right wheel W2, thereby enabling switching to make the first motor unit 6 and the second motor unit 7 drive the left wheel W1 and the right wheel W2 either independently or synchronously.

For ease of better understanding of this application, FIG. 7 further schematically shows specific structures of a middle housing member 1 and a transmission apparatus in a preferred implementation. Specifically, side housing members 2 may be connected to two sides of the middle housing member 1 in a transverse direction, respectively, and the two side housing members 2 may be connected to two sides of the middle housing member 1 by fasteners such as bolts. The first motor unit 6 and the second motor unit 7 are correspondingly mounted in the two side housing members 2, respectively, and then can be assembled into a whole vehicle after subassembly is completed.

**In** dual powertrains in a preferred implementation of this application, a middle partition 18 is disposed in the middle housing member 1, and the middle partition 18 divides the first mounting cavity 16 into a first left half mounting cavity 161 and a first right half mounting cavity 162, and divides the second mounting cavity 17 into a second left half mounting cavity 171 and a second right half mounting cavity 172. One end of each gear shaft (for example, motor output shafts 9, 91, intermediate shafts 92, 93, power output shafts 94, 95) may be rotatably mounted to the middle partition 18 via a bearing. A motor output shaft 9 of the first motor unit 6 extends into the first left half mounting cavity 161, and is in transmission connection to a power output shaft 94 on a left side through a first transmission apparatus 96 disposed in the second left half mounting cavity 171, thereby driving the left wheel W1 to rotate. A motor output shaft 91 of the second motor component 7 extends into the first right half mounting cavity 162, and is in transmission connection to a second power output shaft 95 on a right side through a second transmission apparatus 97 disposed in the second right half mounting cavity 172, thereby driving the right wheel W2 to rotate.

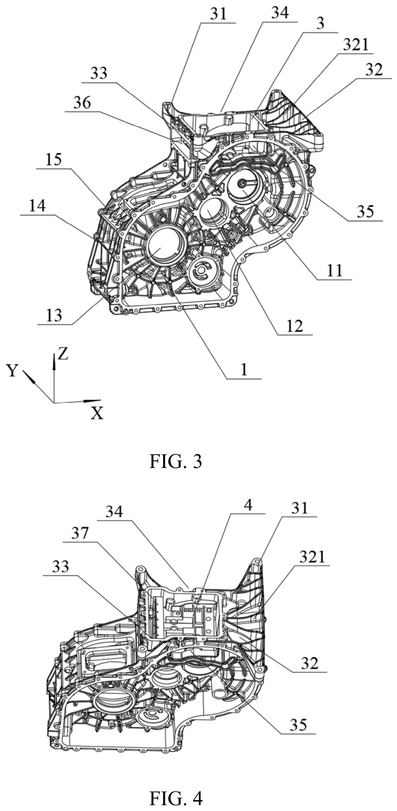

With reference to FIG. 3 to FIG. 5, the middle housing member 1 is provided with a first mounting hole 11 fitting with motor output shafts 9, 91 of the motor unit, and the first mounting hole 11 is located directly below the terminal block mounting cavity 37. In this design, only a small input gear in the middle and a transmission gear meshed with the small input gear at lower front of the small input gear are essential spaces between the two drive motors. Therefore, a remaining space around the small input gear can be used to arrange a corresponding structure. That is, a top space between the two drive motors is used to arrange the electronic control mounting seat 3 and the terminal block mounting cavity 37, making structural arrangement of the powertrain housing more appropriate.

The middle housing member 1 is provided with a third mounting hole 13 fitting with the power output shafts 94, 95. The third mounting hole 13 is formed at one side, away from the electric control mounting seat 3, of the first mounting hole 11. Further preferably, the third mounting hole 13 is located below a front side of the first mounting hole 11, so that the middle housing member 1 is inclined in a longitudinal direction, which can effectively reduce a space occupied by the powertrain housing in a vertical direction. In addition, the middle housing member 1 is further provided with a second mounting hole 12 fitting with the intermediate shafts 92, 93, and the second mounting hole 12 is located between the first mounting hole 11 and the third mounting hole 13.

With reference to FIG. 3 and FIG. 4, a mounting seat 31 for connecting to the motor controller 5 is disposed on the electric control mounting seat 3, and the mounting seat 31 protrudes from the electric control mounting seat 3 in a transverse direction. In this design, a mounting point of the motor controller 5 protrudes relative to a side surface of the middle housing member 1 to obtain a larger electric control mounting area. In addition, this design allows a bolt to pass through the motor controller 5 from top to bottom to be screwed onto the mounting seat 31, thereby increasing convenience of assembling the motor controller 5.

The electric control mounting seat 3 includes a first support seat 32 and a second support seat 33 that are oppositely arranged in a front-rear direction of the middle housing member 1. At least two mounting seats 31 are arranged on each of the first support seat 32 and the second support seat 33, and a transverse width of the first support seat 32 is greater than that of the second support seat 33. The front-rear direction in this application is an X-axis direction in FIG. 3. That is, the first support seat 32 and the second support seat 33 are spaced apart in the X-axis direction, and structural strength of the first support seat 32 is greater than that of the second support seat 33, so that the electric control mounting seat 3 can form a front-small rear-large structure. This is because mass of a capacitor in the motor controller 5 is relatively large, a rear region of the motor controller 5 where the capacitor is arranged is heavier. Therefore, in this application, the structural strength of the first support seat 32 for supporting the rear region of the motor controller 5 is increased to ensure that the first support seat 32 has sufficient support strength, thereby increasing mounting stability of the motor controller 5.

Further preferably, a plurality of reinforcing plates 321 are disposed on the first support seat 32, and the plurality of reinforcing plates 321 are spaced apart in the transverse direction of the middle housing member 1 to form a grid-like structure on the top of the first support seat 32. The plurality of reinforcing plates 321 can effectively increase the structural strength of the first support seat 32, and can form the grid-like structure on the top of the first support seat 32 to reduce weight of the first support seat 32, thereby reducing the weight of the entire powertrain housing.

With reference to FIG. 3 and FIG. 4, one mounting seat 31 is disposed on either side of the first support seat 32, and one mounting seat 31 is disposed on either side of the second support seat 33. The top of the mounting seat 31 extends upward so that a groove 34 that is recessed toward the interior of the middle housing member 1 is formed on the electric control mounting seat 3. Specifically, there are four mounting points for the motor controller 5, and the four mounting points are evenly distributed. The four mounting points cooperate with four fastening points of the motor controller 5 to effectively ensure mounting accuracy of a dual-electric-control assembly and the middle housing member 1. The top of the mounting seat 31 extends upward from the electric control mounting seat 3, so that grooves 34 are formed at the tops of two corresponding sides of the electric control mounting seat 3 in the transverse direction. The transverse direction herein is a Y-axis direction in FIG. 3. With reference to FIG. 3, FIG. 4 and FIG. 5, a mounting point for the electric control mounting seat 3 has a height difference and an arc-shaped connecting structure relative to a mounting surface, so that a groove 34 is formed between the bottom of the motor controller 5 and the middle housing member 1, to provide a space for thermal expansion/contraction, for space avoidance of a structure partially extending from the bottom of the motor controller 5, and for airflow so as to fulfill air-cooling requirements and related requirements.

Two corresponding sides of the electric control mounting seat 3 in a transverse direction of the middle housing member 1 each are provided with a first wire opening 35 for a line to pass through. The first wire opening 35 communicates with the terminal block mounting cavity 37. This facilitates connection between the motor unit and the terminal block 4, where the line herein includes a motor three-phase line and a neutral line. A front side of the electric control mounting seat 3 is provided with an assembling opening 36. The assembling opening 36 communicates with the terminal block mounting cavity 37. A wiring bolt of the motor controller 5 can be screwed through the assembling opening 36, thereby increasing convenience of operation. The top of the electric control mounting seat 3 is provided with a second wire opening for a line to pass through, and the second wire opening communicates with the terminal block mounting cavity 37 to facilitate a connection between the motor controller 5 and the terminal block 4.

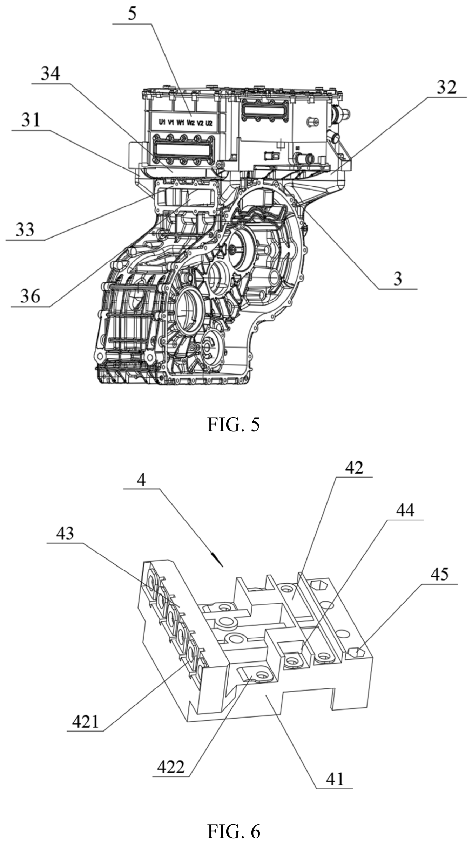

As shown in FIG. 6, the terminal block 4 includes a plate body 41 for connecting to the middle housing member 1. The plate body 41 and the top of the middle housing member 1 are connected preferably by a bolt to increase convenience of disassembly and assembly and firmness of the connection. The plate body 41 is an insulating plate, and a plurality of conductive sheets 42 are disposed on the plate body 41 in a penetrating manner. Each conductive sheet 42 has a corresponding first terminal 421 and a corresponding second terminal 422, and the first terminal 421 and the second terminal 422 extend out of the plate body 41 separately. The first terminal 421 is configured to connect to the motor controller 5, and the second terminal 422 is configured to connect to the motor unit.

A distribution block 43 is vertically disposed on one side of the plate body 41. The distribution block 43 is disposed on one side, close to the second support seat 33, of the plate body 41, so that the distribution block 43 is opposite to the assembling opening 36 on the second support seat 33. The first terminal 421 extends out of the distribution block 43 and is attached to a side surface of the distribution block 43. A top surface of the plate body 41 is provided with a plurality of wire slots 44, and one second terminal 422 is arranged in each of the wire slots 44. The second terminal 422 is attached to the top surface of the plate body 41. The first wire opening 35 is opposite to the wire slot 44 to facilitate the lead-out of the line.

The plurality of conductive sheets 42 are divided into two groups. The two groups of conductive sheets 42 are symmetrically arranged in the transverse direction of the middle housing member 1, and the second terminal 422 of each group of conductive sheets 42 is configured to connect to a corresponding motor unit. As shown in FIG. 6, there are six conductive sheets 42, where three conductive sheets 42 form a group for connecting one of the motor units and the motor controller 5, and the two groups of conductive sheets 42 are arranged on two sides of the terminal block 4, respectively. That is, three wire slots 44 are disposed on either side of the plate body 41 in the Y-axis direction, and the three wire slots 44 are spaced apart in the X-axis direction. The second terminal 422 of the conductive sheet 42 extends out from a corresponding wire slot 44 to form a three-phase line terminal of the motor unit. First terminals 421 of the three conductive sheets 42 are disposed on a side surface of the distribution block 43, and the three first terminals 421 are spaced apart in the Y-axis direction to form a three-phase line terminal of the motor controller 5. The top of one side, away from the distribution block 43, of the plate body 41 is further provided with a neutral line terminal 45, where the neutral line is used when the motor performs voltage boosting charging in a multiplexing mode, and is not connected to the motor controller 5.

The electric control mounting seat 3 is disposed on the top of the middle housing member 1, and the electric control mounting seat 3 and the middle housing member 1 are integrally formed, which can increase convenience of production and ensure structural strength of the powertrain housing.

As shown in FIG. 1 and FIG. 3, the middle housing member 1 is provided with a plurality of reinforcing ribs 14 extending in a transverse direction, and/or the middle housing member 1 is provided with a plurality of second reinforcing ribs 15 extending in a front-rear direction. Specifically, as the left and right drive motors rotate relatively independently, to improve a transverse mode of the powertrain housing and improve NVH performance, the middle housing member 1 is provided with a large number of first reinforcing ribs 14 extending in the transverse direction (the Y-axis direction in the figure). In addition, as the powertrain housing is inclined in a longitudinal direction and has a partially recessed structure, to improve a longitudinal mode of the powertrain housing and improve NVH performance, the middle housing member 1 is provided with a large number of second reinforcing ribs 15 extending in the front-rear direction (Z-axis direction in the figure). Further preferably, to increase the structural strength of the middle housing member 1, the first reinforcing ribs 14 and the second reinforcing ribs 15 are arranged crosswise.

In the following, an X-axis corresponds to a front-rear direction of a powertrain housing, a Y-axis corresponds to a left-right direction of the powertrain housing, a Z-axis corresponds to an up-down direction of the powertrain housing, and the X-axis and the Y-axis can define a horizontal plane.

As described above, with reference to FIG. 1 and FIG. 2, this application provides a powertrain housing, which includes a middle housing member 1, a first accommodation cavity 110 is arranged in the middle housing member 1, and the first accommodation cavity 110 extends in an inclined direction relative to a horizontal plane to form a first space 101 above a front portion of the middle housing member 1 and a second space 102 below a rear portion of the middle housing member 1.

In this application, the first accommodation cavity 110 in the middle housing member 1 for accommodating at least a part of a transmission mechanism and a power output shaft is arranged to extend in the inclined direction relative to the horizontal plane, thereby forming the first space 101 above the front portion of the middle housing member 1 and the second space 102 below the rear portion of the middle housing member 1. The first space 101 and the second space 102 can be used as spaces for the powertrain to avoid other components to ensure that the powertrain does not occupy too much space in a vertical direction and a front-rear direction and achieve sufficient avoidance of the powertrain and other components, thereby improving spatial utilization in vehicle packaging design.

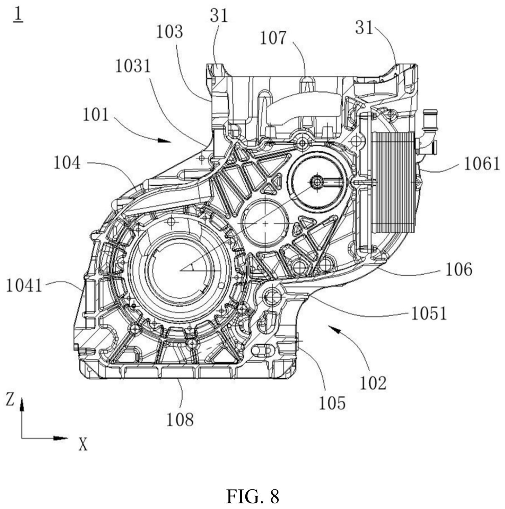

In a related technology, to avoid interference between the powertrain and system functional components of the vehicle often requires, a large space is often required for arranging the powertrain, which directly leads to low spatial utilization in the vehicle, and is unfavorable for vehicle packaging. In this application, the first space 101 located above the front portion of the middle housing member 1 and the second space 102 located below the rear portion of the middle housing member 1 are formed through ingenious design of a powertrain housing structure. The first space 101 and the second space 102 are used for the powertrain to ingeniously avoid other components, which facilitates compact arrangement of components in a vehicle body mounting cavity, thereby improving spatial utilization in vehicle packaging design. As a specific implementation of the first space 101 and the second space 102, with reference to FIG. 8, a top front end of the middle housing member 1 extends downward to form a first front sidewall 103, a front upper end of the middle housing member 1 extends backward to form an upper sidewall 104, and the first space 101 is positioned between a front side of the first front sidewall 103 and an upper side of the upper sidewall 104. A bottom rear end of the middle housing member 1 extends upward to form a first rear sidewall 105, a rear lower end of the middle housing member 1 extends forward to form a lower sidewall 106, and the second space 102 is positioned between a rear side of the first rear sidewall 105 and a lower side of the lower sidewall 106.

In some embodiments, the top of the middle housing member 1 is formed as a first planar section 107. Through structural arrangement of the first planar section 107, it is convenient to form a top surface with a larger space in the first accommodation cavity 110 for accommodating components such as a power input shaft.

Furthermore, a mounting seat 31 is disposed on the first planar section 107 for mounting an electric control. Through structural arrangement of the first planar section 107, it is convenient for arrangement of the mounting seat 31 for mounting the electric control. The mounting seat 31 may be in any appropriate form. For example, the mounting seat 31 is a plurality of threaded holes for bolts to pass through to fasten the electric control to the top of the middle housing member 1.

In some embodiments, the bottom of the middle housing member 1 is formed as a second planar section 108. A structurally stable bottom surface is formed through structural arrangement of the second planar section 108. In addition, because the bottom of the middle housing member 1 is arranged as the second planar section 108, a bottom surface with a large space is formed in the first accommodation cavity 110 for accommodating a power output shaft of the transmission, as well as a gear, an oil pump and other parts of the transmission.

In some embodiments, the upper sidewall 104 is configured as an arc-shaped structure protruding in a direction away from the first accommodation cavity 110. A design of the arc-shaped structure adapts to a circular shape of a gear of the power output shaft, so that a larger first space 101 for avoiding other components can be obtained without affecting mounting of parts in the first accommodation cavity 110. It may be understood that the lower sidewall 106 is configured as an arc-shaped structure protruding in a direction away from the first accommodation cavity 110. In this way, a larger second space 102 for avoiding other components can be obtained without affecting mounting of the parts in the first accommodation cavity 110 at corresponding positions.

In some embodiments, the first front sidewall 103 and the upper sidewall 104 are connected via a first arc-shaped section 1031, and the first arc-shaped section 1031 is configured to be recessed toward the inside of the first accommodation cavity 110. The first arc-shaped section 1031 is disposed to ensure that a larger first space 101 can be obtained. In addition, a structural design of the first arc-shaped section 1031 may also improve structural strength of the middle housing member 1. It may be understood that the first rear sidewall 105 and the lower sidewall 106 are connected via a second arc-shaped section 1051, and the second arc-shaped section 1051 is configured to be recessed toward the inside of the first accommodation cavity 110. In this way, the second arc-shaped section 1051 is disposed to ensure that a larger second space 102 can be obtained, and a structural design of the second arc-shaped section 1051 may also improve structural strength of the middle housing member 1.

In some embodiments, the front upper end of the middle housing member 1 extends downward to a bottom front end to form a second front sidewall 1041; and the rear lower end of the middle housing member 1 extends upward to a top rear end to form a second rear sidewall 1061. Through a structural design of the second front sidewall 1041 and the second rear sidewall 1061, a sufficient space is formed in the first accommodation cavity 110 for mounting a transmission mechanism. In addition, the second front sidewall 1041 can be used as a mounting surface of the powertrain housing and a frame assembly, which facilitates the mounting of the powertrain. The second rear sidewall 1061 can be used as a mounting surface of a system functional component, for example, a recess is formed at the second rear sidewall 1061 for mounting an oil cooler.

In some embodiments, side housing members 2 are detachably mounted on two sides of the middle housing member 1, respectively, the side housing member 2 includes a motor casing 22 and a transmission end cover 220 extending outward in a radial direction of the motor casing 22, and a second accommodation cavity 211 is arranged in the motor casing 22 for mounting a drive motor.

Further, in some embodiments, a motor end cover 21 is detachably mounted at one end of the motor casing 22 away from the middle housing member 1. During the assembly process, the second accommodation cavity 211 can pass through from left to right to facilitate the mounting of the drive motor. In addition, the motor casing 22 and the transmission end cover 220 are disposed as an integrated structure, and after a transmission gear mechanism is mounted in the first accommodation cavity 110 of the middle housing member 1, it is only needed to assemble the integrated motor casing 22 and transmission end cover 220 to one end of the middle housing member 1, which is simple and convenient.

**In** some embodiments, to improve strength of the integrated structure formed by the motor casing 22 and the transmission end cover 220, a reinforcing rib 230 is disposed between the motor casing 22 and the transmission end cover 220. The reinforcing rib 230 may be in any appropriate form. For example, the reinforcing rib 230 extends to the transmission end cover 220 in an axial direction of the motor casing 22, and extends in a circumferential direction of the transmission end cover 220, and then extends again to an axial direction of the motor casing 22.

In this application, a mounting portion 120 is arranged inside the middle housing member 1, the mounting portion 120 is provided with a first mounting hole 11 fitting with a power input shaft 421 and a third mounting hole 13 fitting with power output shafts 94, 95, and an included angle between an axis-to-axis connecting line of the power input shaft 421 and the power output shafts 94, 95 and the horizontal plane is 20° to 60°. By adjusting positions of the power input shaft 421 and the power output shafts 94, 95, specifically, the included angle between an axis-to-axis connecting line of the power input shaft 421 and the power output shafts 94, 95 and the horizontal plane is set to 20° to 60°, thereby satisfying formation of the first space 101 above the front portion of the middle housing member 1 and the second space 102 below the rear portion of the middle housing member 1. Therefore, the powertrain housing can fully avoid other components in the vehicle body mounting cavity.

Furthermore, in this application, the mounting portion 120 is further provided with a second mounting hole 12, and the second mounting hole 12 is configured to mate with intermediate shafts 92, 93 between the power input shaft 421 and the power output shafts 94, 95.

This application further provides a powertrain, including two motor units, two transmission units, and the foregoing powertrain housing, each motor unit is arranged in one motor casing 22, and the two transmission units are arranged in a receiving space defined between a middle housing member 1 and a side housing member 2. The powertrain housing herein includes all technical features of the foregoing powertrain housing.

In some embodiments, the motor unit includes a transmission and a drive motor.

In some embodiments, the powertrain includes a plurality of system functional components, at least a part of at least one of the system functional components is disposed in a first space 101, and/or at least a part of at least one of the system functional components is disposed in a second space 102.

At least a part of at least one of the plurality of system functional components that constitute the powertrain is arranged in the first space 101 and/or the second space 102, so that compactness of the powertrain is further improved, making a space of a vehicle fully utilized.

In some embodiments, as shown in FIG. 7, the powertrain includes a first motor unit 6 and a second motor unit 7, the first motor unit 6 is configured to drive a left wheel W1, and the second motor unit 7 is configured to drive a right wheel W2. The system functional component includes a locking mechanism 8 arranged between the first motor unit 6 and the second motor unit 7, the locking mechanism 8 is configured to connect the first motor unit 6 and the second motor unit 7 for selective synchronization, and at least a part of the locking mechanism 8 is located in the first space 101.

It may be understood that the powertrain can be configured to drive front wheels of a vehicle. In this way, the vehicle is a front-wheel drive vehicle.

In some other embodiments, the powertrain can be configured to drive rear wheels of a vehicle. In this way, the vehicle is a rear-wheel drive vehicle.

Optionally, two powertrains are disposed, one of the powertrains is configured to drive the front wheels of the vehicle, and the other is configured to drive the rear wheels of the vehicle. In this case, the vehicle is a four-wheel drive vehicle.

With reference to FIG. 7, that the powertrain drives the front wheels of the vehicle is used as an example. The first motor unit 6 is configured to drive a left front wheel, and a second motor 7 is configured to drive a right front wheel.

The first motor unit 6 includes a first drive motor 410 and a first transmission 420, and the second motor unit 7 includes a second drive motor 510 and a second transmission 520. In this way, each wheel can be driven separately, that is, each wheel corresponds to a drive motor and a transmission connected to the drive motor.

The first transmission 420 and the second transmission 520 are both two-stage speed reducers, which are used for reducing a speed of the drive motor to increase a torque.

Specifically, the first transmission 420 and the second transmission 520 each include a power input shaft 421, intermediate shafts 92, 93, and power output shafts 94, 95. A primary driving gear 1a is disposed on the power input shaft 421, and the power input shaft 421 is connected to motor output shafts 9, 91 of the drive motor on a corresponding side to acquire power.

A primary driven gear 1b and a secondary driving gear 2a are disposed on the intermediate shafts 92, 93, a secondary driven gear 2b is disposed on the power output shafts 94, 95, and the power output shafts 94 and 95 are connected to a wheel on a corresponding side. The primary driving gear 1a is meshed with the primary driven gear 1b, and the secondary driving gear 2a is meshed with the secondary driven gear 2b, so that the power of the drive motor can be transmitted to wheels on a corresponding side through the power input shaft 421, the intermediate shafts 92, 93 and the power output shafts 94, 95 in sequence, thereby driving the wheels to rotate.

In this application, the first motor unit 6 and the second motor unit 7 are connected by the locking mechanism 8 for selective synchronization, so that the powertrain has two operating states, that is, an unlocked state and a locked state. When the powertrain is in the locked state, the first motor unit 6 and the second motor unit 7 are synchronized by the locking mechanism 8, so that the wheel driven by the first motor unit 6 and the wheel driven by the second motor unit 7 can rotate synchronously. When the powertrain is in the unlocked state, the first motor unit 6 and the second motor unit 7 are independent of each other.

When a wheel on one side slips, the locking mechanism 8 synchronizes the first motor unit 6 and the second motor unit 7 to output the power of the motor unit corresponding to a nonslipping wheel to the wheel on a slipping side through the locking mechanism 8, thereby achieving power drive. This helps the vehicle to get out of trouble.

When the motor unit on one side is damaged or fails, the locking mechanism 8 synchronizes the first motor unit 6 and the second motor unit 7 to output the power of a normally functioning motor unit to the motor unit on the other side through the locking mechanism 8 to drive the wheel on that side, thereby achieving power drive. This makes use more convenient.

That is, when one of the wheels on either side slips or one of the two drive motors is damaged or fails, the locking mechanism 8 is configured to lock the first motor unit 6 and the second motor unit 7 to synchronize the first motor unit 6 and the second motor unit 7, thereby making the wheels on two sides rotate synchronously to ensure ability of the vehicle to get out of trouble. The driving of the vehicle can still be implemented when one of the drive motors fails.

In this application, the locking mechanism 8 may be any appropriate apparatus, and those skilled in the art can make a specific selection according to a size of the vehicle body mounting cavity, and detailed description thereof is omitted in this application. At least a part of the locking mechanism 8 is arranged in the first space 101, so that the space in the vehicle body mounting cavity can be fully utilized.

In some embodiments, the system functional component includes an oil pump, and at least a part of the oil pump is located in the second space 102. It may be understood that the oil pump is a key component of the powertrain, which can pressurize lubricating oil at the bottom of the transmission and transport the lubricating oil to the top of the transmission to fully lubricate a gear mechanism in the transmission. By disposing at least a part of the oil pump in the second space 102, the space in the vehicle body mounting cavity can be fully utilized. It should be noted that the oil pump may be any appropriate apparatus, such as an electronic pump commonly used in the art.

The third aspect of this application provides a vehicle, which includes the foregoing powertrain, where the powertrain includes all technical features of the foregoing powertrain, and further includes all the technical features of the foregoing powertrain housing.

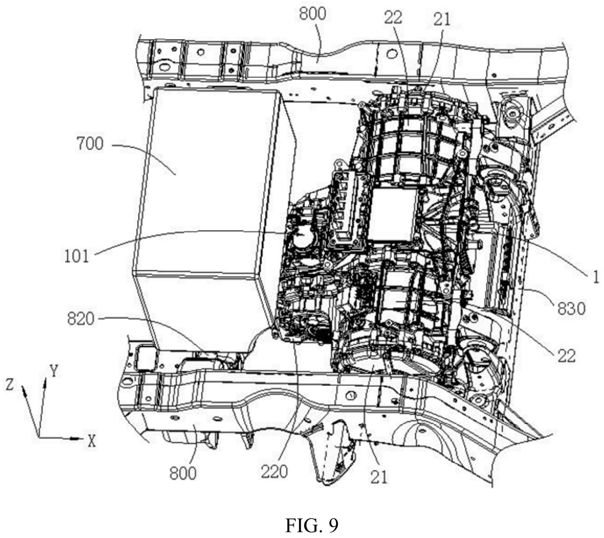

In some embodiments, with reference to FIG. 6 and FIG. 9, the vehicle further includes an engine assembly 700, and at least a part of the engine assembly 700 is located in a first space 101. That is, the vehicle is a hybrid vehicle. At least a part of the engine assembly 700 is arranged in the first space 101, so that compact arrangement of the powertrain and the engine assembly 700 is achieved, and a space in a vehicle body mounting cavity is fully utilized.

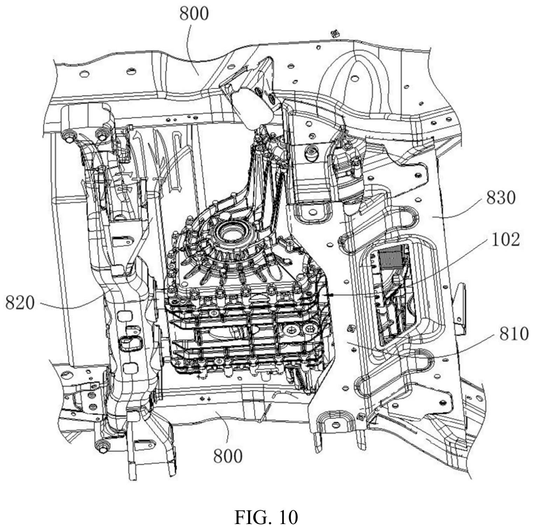

In some embodiments, with reference to FIG. 10, the vehicle further includes a frame assembly, and the frame assembly includes a first cross beam 810 extending in a transverse direction, and at least a part of the first cross beam 810 is located in a second space 102. In this application, at least a part of the first cross beam 810 for constituting the frame assembly is arranged in a second space 102, thereby fully utilizing the space of the vehicle body mounting cavity and improving spatial utilization.

In some embodiments, the frame assembly further includes a second cross beam 820 extending in a transverse direction, and a front portion of the middle housing member 1 is connected to the second cross beam 820 by suspension. Arrangement of the second cross beam 820 facilitates mounting of a middle housing member 1. It may be understood that, to ensure mounting reliability of the powertrain, the frame assembly further includes a third cross beam 830 extending in the transverse direction, and two side housing members 2 are detachably mounted on two sides of the middle housing member 1, respectively, and rear portions of the two side housing members 2 are connected to the third cross beam 830 by suspension. Mounting reliability of the powertrain is ensured by connecting the middle housing member 1 and the two side housing members 2 constituting the powertrain housing to the frame assembly in a suspension connection manner.

In a specific implementation of this application, with reference to FIG. 10, the frame assembly includes two longitudinal beams 800 extending in a longitudinal direction, and a second cross beam 820, a first cross beam 810 and a third cross beam 830 extending in a transverse direction. The two longitudinal beams 800 are spaced apart in the transverse direction, and the second cross beam 820, the first cross beam 810 and the third cross beam 830 are spaced art in a front-rear direction in sequence.

Two ends of the second cross beam 820, the first cross beam 810 and the third cross beam 830 are respectively connected to the two longitudinal beams 800 to form a frame structure for mounting the powertrain. At least a part of the first cross beam 810 is located in a second space 102, a front portion of the middle housing member 1 is connected to the second cross beam 820 by suspension, and rear portions of two side housing members 2 are connected to the third cross beam 830 by suspension.

It should be noted that relational terms such as "first" and "second" herein are merely used to distinguish one entity or operation from another entity or operation without necessarily requiring or implying any such actual relationship or order between these entities or operations. Moreover, the terms "including", "comprising" or any other variation thereof are intended to cover non-exclusive inclusion, so that a process, method, commodity or device including a series of elements includes not only those elements, but also other elements not explicitly listed, or elements inherent to such process, method, commodity or device. Without more restrictions, an element defined by the phrase "including one" does not exclude the existence of other identical elements in the process, method, commodity or device including the element.

The foregoing is only the specific implementation of the present disclosure, such that those skilled in the art can understand or implement this application. Various modifications to these implementations are clear to those skilled in the art, the general principles defined herein may be implemented in other implementations without departing from the spirit and scope of this application. Therefore, this application is not limited to these implementations disclosed herein, but is to conform to the widest scope in accordance with the principles and novel features disclosed herein.

## Claims

1. A powertrain housing, comprising:
a middle housing member (1), wherein an electric control mounting seat (3) for mounting a motor controller (5) is disposed on the middle housing member (1), and a terminal block mounting cavity (37) for accommodating a terminal block (4) is arranged inside the electric control mounting seat (3); and
two side housing members (2), wherein the two side housing members (2) are arranged on two sides of the middle housing member (1), respectively, and each side housing member (2) comprises a motor casing (22) for mounting a motor unit, wherein
the terminal block mounting cavity (37) is located at a portion of a space defined between the two motor casings (22), which is close to the electric control mounting seat (3).

2. The powertrain housing according to claim 1, wherein the middle housing member (1) is provided with a first mounting hole (11) fitting with a motor output shaft of the motor unit, and the first mounting hole (11) is located directly below the terminal block mounting cavity (37).

3. The powertrain housing according to claim 2, wherein the middle housing member (1) is further provided with a third mounting hole (13) fitting with a power output shaft, and the third mounting hole (13) is disposed on one side, away from the electric control mounting seat (3), of the first mounting hole (11).

4. The powertrain housing according to claim 3, wherein the third mounting hole (13) is located below a front side of the first mounting hole (11).

5. The powertrain housing according to claim 3 or 4, wherein the middle housing member (1) is further provided with a second mounting hole (12) fitting with an intermediate shaft, and the second mounting hole (12) is located between the first mounting hole (11) and the third mounting hole (13).

6. The powertrain housing according to any one of claims 1 to 5, wherein a plurality of mounting seats (31) for connecting to a motor controller (5) are disposed on the electric control mounting seat (3), and the mounting seat (31) protrudes from the electric control mounting seat (3) in a transverse direction.

7. The powertrain housing according to claim 6, wherein the electronic control mounting seat (3) comprises a first support seat (32) and a second support seat (33), the first support seat (32) and the second support seat (33) are arranged opposite to each other in a front-rear direction of the middle housing member (1), at least two mounting seats (31) are arranged on each of the first support seat (32) and the second support seat (33), and a transverse width of the first support seat (32) is greater than that of the second support seat (33).

8. The powertrain housing according to claim 7, wherein a plurality of reinforcing plates (321) are disposed on the first support seat (32), and the plurality of reinforcing plates (321) are spaced apart in a transverse direction of the middle housing member (1) to form a grid-like structure on the top of the first support seat (32).

9. The powertrain housing according to claim 7 or 8, wherein one mounting seat (31) is disposed on either side of the first support seat (32), one mounting seat (31) is disposed on either side of the second support seat (33), and the top of the mounting seat (31) extends upward so that a groove (34) that is recessed toward the inside of the middle housing member (1) is formed on the electric control mounting seat (3).

10. The powertrain housing according to any one of claims 1 to 9, wherein two corresponding sides of the electric control mounting seat (3) in the transverse direction of the middle housing member (1) each are provided with a first wire opening (35) for a line to pass through, and the first wire opening (35) communicates with the terminal block mounting cavity (37).

11. The powertrain housing according to any one of claims 1 to 10, wherein a front side of the electric control mounting seat (3) is provided with an assembling opening (36), and the assembling opening (36) communicates with the terminal block mounting cavity (37).

12. The powertrain housing according to any one of claims 1 to 11, wherein the top of the electric control mounting seat (3) is provided with a second wire opening for a line to pass through, and the second wire opening communicates with the terminal block mounting cavity (37).

13. The powertrain housing according to any one of claims 1 to 12, wherein the terminal block (4) comprises a plate body (41) for connecting to the middle housing member (1), a plurality of conductive sheets (42) are arranged on the plate body (41) in a penetrating manner, each of the conductive sheets (42) is provided with a corresponding first terminal (421) and a corresponding second terminal (422), the first terminal (421) and the second terminal (422) extend out of the plate body (41) separately, the first terminal (421) is configured to connect to the motor controller (5), and the second terminal (422) is configured to connect to the motor unit.

14. The powertrain housing according to claim 13, wherein a distribution block (43) is vertically disposed on one side of the plate body (41), the first terminal (421) extends out of the distribution block (43), a top surface of the plate body (41) is provided with a plurality of wire slots (44) that are spaced apart, and each wire slot (44) is internally provided with one of the second terminals (422).

15. The powertrain housing according to claim 13 or 14, wherein the plurality of conductive sheets (42) are divided into two groups, the two groups of conductive sheets (42) are symmetrically arranged in the transverse direction of the middle housing member (1), and the second terminal (422) of each group of conductive sheets (42) is configured to connect to a corresponding motor unit.

16. The powertrain housing according to any one of claims 1 to 15, wherein the electric control mounting seat (3) is arranged at the top of the middle housing member (1), and the electric control mounting seat (3) and the middle housing member (1) are integrally formed.

17. The powertrain housing according to any one of claims 1 to 16, wherein the middle housing member (1) is provided with a plurality of first reinforcing ribs (14) extending in the transverse direction, and/or
the middle housing member (1) is provided with a plurality of second reinforcing ribs (15) extending in a front-rear direction.

18. The powertrain housing according to any one of claims 1 to 17, wherein a first accommodation cavity (110) is arranged in the middle housing member (1), and the first accommodation cavity (110) extends in an inclined direction relative to a horizontal plane to form a first space (101) above a front portion of the middle housing member (1) and a second space (102) below a rear portion of the middle housing member (1).

19. The powertrain housing according to claim 18, wherein a top front end of the middle housing member (1) extends downward to form a first front sidewall (103), a front upper end of the middle housing member (1) extends backward to form an upper sidewall (104), and the first space (101) is positioned between a front side of the first front sidewall (103) and an upper side of the upper sidewall (104);
a bottom rear end of the middle housing member (1) extends upward to form a first rear sidewall (105), a rear lower end of the middle housing member (1) extends forward to form a lower sidewall (106), and the second space (102) is positioned between a rear side of the first rear sidewall (105) and at a lower side of the lower sidewall (106).

20. The powertrain housing according to claim 18 or 19, wherein the top of the middle housing member (1) is formed as a first planar section (107), and/or
the bottom of the middle housing member (1) is formed as a second planar section (108).

21. The powertrain housing according to claim 20, wherein a mounting seat (31) is disposed on the first planar section (107) for mounting an electronic control.

22. The powertrain housing according to any one of claims 19 to 21, wherein the upper sidewall (104) is configured as an arc-shaped structure protruding toward a direction away from the first accommodation cavity (110); and/or
the lower sidewall (106) is configured as an arc-shaped structure protruding toward a direction away from the first accommodation cavity (110).

23. The powertrain housing according to any one of claims 19 to 22, wherein the first front sidewall (103) and the upper sidewall (104) are connected via a first arc-shaped section (1031), and the first arc-shaped section (1031) is arranged to be recessed toward the inside of the first accommodation cavity (110); and/or
the first rear sidewall (105) and the lower sidewall (106) are connected via a second arc-shaped section (1051), and the second arc-shaped section (1051) is arranged to be recessed toward the inside of the first accommodation cavity (110).

24. The powertrain housing according to any one of claims 19 to 23, wherein the front upper end of the middle housing member (1) extends downward to a bottom front end to form a second front sidewall (1041);
the rear lower end of the middle housing member (1) extends upward to a top rear end to form a second rear sidewall (1061).

25. The powertrain housing according to any one of claims 1 to 24, wherein side housing members (2) are detachably mounted on two sides of the middle housing member (1), respectively, the side housing member (2) comprises a motor casing (22) and a transmission end cover (220) extending outward in a radial direction of the motor casing (22), and a second accommodation cavity (211) is arranged in the motor casing (22) for mounting a drive motor.

26. The powertrain housing according to claim 25, wherein a motor end cover (21) is detachably mounted on one end of the motor casing (22) away from the middle housing member (1).

27. The powertrain housing according to claim 25, wherein a reinforcing rib (230) is disposed between the motor casing (22) and the transmission end cover (220).

28. The powertrain housing according to any one of claims 1 to 27, wherein a mounting portion (120) is arranged inside the middle housing member (1), the mounting portion (120) is provided with a first mounting hole (11) fitting with a power input shaft (421) and a third mounting hole (13) fitting with power output shafts (94, 95), and an included angle between an axis-to-axis connecting line of the power input shaft (421) and the power output shafts (94, 95) and the horizontal plane is 20°to 60°.

29. The powertrain housing according to claim 28, wherein the mounting portion (120) is further provided with a second mounting hole (12), and the second mounting hole (12) is configured to mate with intermediate shafts (92, 93) between the power input shaft (421) and the power output shafts (94, 95).

30. A powertrain, comprising two motor units, two transmission units, and a powertrain housing according to any one of claims 1 to 29, wherein each of the motor units is arranged in one motor casing (22), and the two transmission units are arranged in a receiving space defined between a middle housing member (1) and a side housing member (2).

31. The powertrain according to claim 30, wherein the motor unit includes a transmission and a drive motor.

32. The powertrain according to claim 30 or 31, wherein the powertrain comprises a plurality of system functional components, at least a part of at least one of the system functional components is arranged in a first space (101) above a front portion of the middle housing member (1), and/or at least a part of at least one of the system functional components is arranged in a second space (102) below a rear portion of the middle housing member (1).

33. The power assembly according to claim 32, wherein the powertrain comprises a first motor unit (6) and a second motor unit (7), the first motor unit (6) is configured to drive a left wheel, and the second motor unit (7) is configured to drive a right wheel;
the system functional component comprises a locking mechanism (8) arranged between the first motor unit (6) and the second motor unit (7), the locking mechanism (8) is arranged to connect the first motor unit (6) and the second motor unit (7) for selective synchronization, and at least a part of the locking mechanism (8) is located in the first space (101).

34. The powertrain according to claim 32 or 33, wherein the system functional component comprises an oil pump, and at least a part of the oil pump is located in the second space (102).

35. A vehicle, comprising the powertrain according to any one of claims 30 to 34.

36. The vehicle according to claim 35, wherein the vehicle further comprises an engine assembly (700), and at least a part of the engine assembly (700) is located in a first space (101) above a front portion of a middle housing member (1).

37. The vehicle according to claim 35 or 36, wherein the vehicle further comprises a frame assembly, the frame assembly comprises a first cross beam (810) extending in a transverse direction, and at least a part of the first cross beam (810) is located in a second space (102) below a rear portion of the middle housing member (1).

38. The vehicle according to any one of claims 35 to 37, wherein the frame assembly further comprises a second cross beam (820) extending in the transverse direction, and the front portion of the middle housing member (1) is connected to the second cross beam (820) by suspension.

39. The vehicle according to any one of claims 35 to 38, wherein the frame assembly further comprises a third cross beam (830) extending in the transverse direction, two side housing members (2) are detachably mounted on two sides of the middle housing member (1), respectively, and rear portions of the two side housing members (2) are connected to the third cross beam (830) by suspension.
